# EUROPÄISCHE PATENTSCHRIFT

(11) **EP 0 716 112 B1**
(45) Veröffentlichungstag und Bekanntmachung des Hinweises auf die Patenterteilung: **17.10.2001**
(21) Anmeldenummer: 95118905.9
(22) Anmeldetag: 01.12.1995
(51) Int. Cl.: C08G 63/85

(54) **Verfahren zur Herstellung von Polyestern und Copolyestern**
Process for the preparation of polyesters and copolyesters
Procédé pour la préparation de polyesters et de copolyesters

(30) Priorität: 08.12.1994 DE 4443648
(43) Veröffentlichungstag der Anmeldung: 12.06.1996
(73) Patentinhaber: Acordis Industrial Fibers GmbH, 42103 Wuppertal (DE)
(72) Erfinder: Martl, Michael, Dr., D-60325 Frankfurt (DE); Mezger, Thomas, Dr., NL-6931 CK Westervoort (NL); Kuhn, Bernhard, D-64720 Michelstadt (DE); Oberlein, Gerriet, Dr., D-42553 Velbert (DE); Haferland, Klaus, Dr., D-42113 Wuppertal (DE); Boehringer, Bertram, Dr., D-42115 Wuppertal (DE); Berger, Ulrich, Dr., D-63839 Kleinwallstadt (DE)
(74) Vertreter: Fett, Günter

(56) Entgegenhaltungen:
- EP-A- 0 422 896
- EP-A- 0 472 179
- CH-A- 455 290
- DE-A- 4 400 300
- FR-A- 1 230 124
- FR-A- 2 177 846
- FR-A- 2 419 949
- US-A- 4 421 908
- CHEMICAL ABSTRACTS, vol. 70, no. 4, 27.Januar 1969 Columbus, Ohio, US; abstract no. 12150, XP002010174 & JP-B-43 013 233 (TOYO RAYON CO., LTD.) 4.Juni 1968
- CHEMICAL ABSTRACTS, vol. 74, no. 10, 8.März 1971 Columbus, Ohio, US; abstract no. 42888, XP002010175 & JP-B-45 033 671 (TORAY IND., INC.) 29.Oktober 1970
- DATABASE WPI Week 7129 Derwent Publications Ltd., London, GB; AN 71-48912S XP002010176 & JP-B-46 025 869 (ASAHI CHEMICAL IND. CO. LTD.) , 1971
- DATABASE WPI Week 7718 Derwent Publications Ltd., London, GB; AN 77-31612Y XP002010177 & JP-A-52 036 189 (TEIJIN KK) , 19.März 1977
- JP-B-48-041 949

## Beschreibung

Polyester und Copolyester werden unabhängig von ihrer Konstitution, die sich über zahlreich mögliche Variationen von aliphatisch bis vollaromatisch erstrecken kann, im allgemeinen nach einem Zweistufenverfahren hergestellt. In der ersten Stufe werden insbesondere durch Umesterung von Dicarbonsäureestern oder durch Veresterung von Dicarbonsäuren mit überschüssigen Dialkoholen die zu polykondensierenden Ester oder ein aus einem Gemisch von Oligoestern bestehendes Polyestervorkondensat hergestellt, dessen durchschnittliches relatives Molekulargewicht je nach Molverhältnis der Ausgangsverbindungen in der Regel zwischen 100-2000 betragen kann. Für eine gegebenenfalls gewünschte verzweigende Modifizierung können auch begrenzte Mengen von höherfunktionellen Ausgangskomponenten wie Glycerin, Pentaerythrit und Trimellitsäure, eingesetzt werden. Äquivalente Verfahrensweisen für die erste Stufe sind die Umsetzung von Dicarbonsäurechloriden mit Diolen, die Anlagerung von Ethylenoxid an Dicarbonsäuren, die Veresterung eines Anhydrids mit einem Dialkohol, die Umsetzung von Anhydriden mit Epoxiden und die Umsetzung von Dicarbonsäuren oder Dicarbonsäureestern mit dem Diacetat eines Diols. Die zweite Reaktionsstufe stellt die eigentliche Polykondensation dar, in der unter Abspaltung von Alkohol und/oder Wasser das gewünschte hohe Molekulargewicht der Polyester oder Copolyester erreicht werden muß. Neben dem Anlegen von Vakuum, Durchleiten eines Inertgases und der Erhöhung der Reaktionstemperatur wird die Polykondensation insbesondere durch spezifische Polykondensationskatalysatoren beschleunigt.

Für die Herstellung von film- und faserbildenden Polyestern sind zur Beschleunigung der Polykondensationsreaktion bereits eine Legion von Polykondensationskatalysatoren vorgeschlagen worden. Da die überwiegende Mehrzahl der in zahlreichen Patenten genannten Verbindungen eine unzureichende katalytische Aktivität oder andere Nachteile besitzt, hat sich in der Technik fast ausschließlich Sb₂O₃ als Polykondensationskatalysator durchgesetzt. Leider stößt dieser Katalysator in neuerer Zeit auf umweltpolitische Bedenken, so daß sein Ersatz allgemein wünschenswert erscheint.

Es werden immer wieder Versuche unternommen, Ersatzkatalysatoren für Sb₂O₃ bereitzustellen. Insbesondere wurden bereits Alkoxytitanate, speziell Tetrabutyltitanat, vorgeschlagen, wobei diese Verbindungen entweder nur für die Umesterung (JA-PS 74 11 474), für die Umesterung und Polykondensation (JA-OS 77 86 496) oder nur für die Polykondensation (JA-OS 80 23 136) verwendet werden, da sie für beide Stufen katalytisch wirksam sind. Da der Einsatz von Titanverbindungen Verfärbungen an den polykondensierten Polyestern hervorruft, ist es nach der JA-OS 78 106 792 erforderlich, Titanverbindungen mit verschiedenen organischen Substanzen, z.B. Aminen, vorzubehandeln oder mit anderen Polykondensationskatalysatoren, insbesondere mit Sb₂O₃, zu kombinieren (JA-OS 78 109 597).

Aus der DE P 947 517 ist es bekannt, zur Herstellung von-Polyethylenterephthalat Metalloxide, wie Zinkoxid, Bortrioxid, Bleioxid und Titandioxid als Polykondensationskatalysator einzusetzen. Die Polykondensationsdauer mit diesen Metalloxiden ist aber unverhältnismäßig lang und währt nach den dortigen Beispielen 7-14 Stunden. Aus diesem Grunde wird in BE P 619 210 zur Herstellung der dortigen Polyester bei Einsatz von TiO₂ als weiterer Polykondensationskatalysator Sb₂O₃ verwendet (vgl. Beispiel 1), durch den sich die Schnelligkeit der Polykondensation immens erhöht. Aus diesen Umständen resultierte natürlich die Zweckmäßigkeit, nur mit Sb₂O₃ oder Titantetrabutylat als Polykondensationskatalysator zu arbeiten (vgl. die weiteren Beispiele von BE P 619 210).

JP-B-45 033 671 lehrt ein Verfahren zur Polyetheresterherstellung unter Verwendung einer Mischung aus (1) einem Kondensat hergestellt aus der Hydrolyse eines Titansäureesters, (2) eines Fettsäuresalzes oder-halogenides von Kobalt und (3) eines Fettsäuresalzes, -halogenides oder - carbonates eines Metalls ausgewählt aus der aus Calcium, Magnesium, Zink, Mangan oder Lanthan bestehenden Gruppe als Katalysator.

JP-B-43 013 233 offenbart ein Hydrolyseprodukt einer Organotitanverbindung oder dieser Verbindung, die mit einem organischen Lösungsmittel behandelt wird.CH-A-455 290 schlägt vor, für die Synthese von Polyestern als Polykondensationskatalysator ein frisch ausgefälltes Titan(IV)-oxidhydrat-Gel, insbesondere hergestellt durch Dialyse von wäßrigen TiCl₄- Lösungen (s. Spalte 3, Absatz 4, Satz 1), zu verwenden, wobei vor allem auch die Mitverwendung des bewährten Polykondensationskatalysators Sb₂O₃ vorgesehen ist (s. Beispiele 2 und 3).

JP-B-46 025 869 offenbart einen Polykondensationskatalysator, der nicht nur durch alkalische Hydrolyse von Titantetrachlorid oder von Titanat erhalten wurde, sondern zu dessen Herstellung auch noch eine 100 stündige Lufttrocknung vorgeschrieben ist. Tabelle 1 von JP-B-46 025 869 zeigt, dass unter diesen Herstellungsbedingungen nur solche TiO₂-Hydrate für die Polyesterherstellung geeignet sind, die 2,5 - 3,0 Mol Wasser pro Mol TiO₂ enthalten. Das bedeutet aber, dass die in Rede stehenden Katalysatoren einen Wassergehalt von 36 Gew.% (TiO₂•2,5 H₂O) bis 40,3 Gew.% (TiO₂•3H₂O) aufweisen.
JP-A-52 036 189 lehrt ein Hydrolyseprodukt aus RO-[Ti(OR)₂-O]ₙ-R mit n ≥ 2 bis 50, bevorzugt von 4 bis 20, das durch Gießen des Titanalkoholates in das Wasser und Erhitzen der Titanalkoholat/Wasser- Lösung auf 60-70 °C hergestellt wird. (s. Beispiele 1-3). Besagtes Hydrolyseprodukt benötigt eine Polykondensationszeit von wenigstens 3 Stunden und 40 Minuten.

JP-B-48 041 949 schlägt zur Herstellung von Polyalkylenterephthalaten als Polykondensationskatalysatoren Titandioxid/Siliciumdioxid/Alkalimetalloxid-Verbindungen der Formel

(1) l TiOₓ • m SiO₂ • n H₂O **•** p M₂O

vor. M bedeutet ein Alkalimetall, x eine reelle Zahl zwischen 1,5 und 2,0 und 1, m, n und p sind positive ganze Zahlen. Diese Polykondensationskatalysatoren werden durch ein Naßfällverfahren hergestellt, bei dem man Titantetrachlorid, Titantrichlorid oder Titansulfat einer wäßrigen Lösung von löslichen Silicaten, wie z.B. Natriumsilikat, Silikatdihydrat oder von löslichen Metasilikaten, wie z.B. Natriummetasilikat und Kaliummetasilikat, zusetzt und einen pH-Wert von 6-8 einstellt.

Die vorliegende Erfindung stellt sich die Aufgabe, für die allgemeine Synthese von Polyestern und Copolyestern neue Polykondensationskatalysatoren als Ersatz für Sb₂O₃ bereitzustellen, die für das Ökosystem eine erhöhte Sicherheit bieten und sich insbesondere durch eine höhere katalytische Aktivität auszeichnen, als sie Sb₂O₃, TiO₂ und Titantetrabutylat in jeweils gleicher Konzentration aufweisen.

Gegenstand der Erfindung ist ein Verfahren zur Herstellung von Polyestern und Copolyestern durch Polykondensation von polyesterbildenden Ausgangskomponenten, wobei in einer ersten Reaktionsstufe Ester oder Oligoester hergestellt werden, die in einer zweiten Reaktionsstufe in Gegenwart von Titankatalysatoren polykondensiert werden, das dadurch gekennzeichnet ist, daß man in der Polykondensationsstufe zur Polykondensation der Ester oder Oligoester als Polykondensationskatalysator ein Titandioxid/Siliciumdioxid-Copräzipitat mit einer Zusammensetzung aus TiO₂ : SiO₂ von > 90 : 10 mol/mol und/oder ein Titandioxid/Zirkoniumdioxid-Copräzipitat mit einer Zusammensetzung aus TiO₂ : ZrO₂ von > 95 : 5 mol/mol einsetzt, erhältlich durch hydrolytische Ausfällung der entsprechenden, aus ein- oder mehrwertigen Alkoholen gebildeten Metallalkoholate.

Für die erfindungsgemäße Verwendung als Polykondensationskatalysator wird es bevorzugt, daß die Titandioxid/Siliciumdioxid-Copräzipitate und Titandioxid/Zirkoniumdioxid-Copräzipitate durch hydrolytische Ausfällung der entsprechenden, aus einwertigen Alkoholen mit 1-6 C-Atomen gebildeten Metallakoholate erhalten worden sind. Ein Titandioxid/Siliciumdioxid-Copräzipitat aus dem geforderten Zusammensetzungsbereich kann ebenso wie ein entsprechendes Titandioxid/Zirkoniumdioxid-Copräzipitat allein oder als Gemisch mit der jeweils anderen Präzipitat-Art oder im Falle der erwähnten Copräzipitate als Gemisch der eigenen Art mit einer anderen Zusammensetzung innerhalb der geforderten Zusammensetzungsbereiche als Polykondensationskatalysator eingesetzt werden.

Die Herstellung der erfindungsgemäß verwendeten Titandioxid/Siliciumdioxid- und Titandioxid/Zirnoniumdioxid-Copräzipitate ist im Prinzip bekannt (vgl. z.B. B.E. Yoldes, J. Non-Cryst. Solids, 38 u. 39, 81 (1980); E.A. Barringer, H.K. Bowen, J.Am.Ceram. Soc., **65** C 199 (1982); E.A. Barringer, Ph. D. Thesis, MIT (1982); B. Fegley jr., E.A. Barringer, H.K. Bowen, J.Am.Ceram. Soc., **67**, C 113 (1984)). Ausgegangen wird von Metallalkoxiden der Formel M(OR)ₘ, worin M je nach dem gewünschten Mischoxid Ti, Si und Zr und m die ganze Zahl 4 bedeuten, die einer Hydrolyse unterworfen werden. Das Oxidnetzwerk wird hierbei durch Polymerisationsreaktionen gebildet.

Geeignete Alkohole für die Herstellung der Metallalkoxide nach an sich bekannten Methoden sind z.B. einwertige Alkohole, wie Methylalkohol, Äthylalkohol, Propylalkohol, Isopropylalkohol, n-Butanol, Isobutylalkohol, n-Amylalkohol, 3-Methyl-1-butanol, n-Hexanol, 2-Hexanol, 2-Heptanol, n-Octanol und n-Decanol, die einzeln oder als Gemisch verwendet werden können. Es können aber auch mehrwertige Alkohole, gegebenenfalls als Gemisch mit einwertigen Alkoholen, Anwendung finden, wie Äthylenglykol, 1,2-Propandiol, 1,4-Butandiol, 1,6-Hexandiol, 1,10-Decandiol, Glycerin, Trimethylolpropan und Pentaerythrit.

Die organometallischen Verbindungen, im Falle der Herstellung eines nicht-erfindugsgemäßen Titandioxid-Präzipitats z.B. Titan-tetraisopropylat, werden einer Hydrolyse unterworfen, die in unterschiedlicher Art und Weise bewerkstelligt werden kann. So kann z.B. das in absoluten Alkoholen, beispielsweise Äthanol, gelöste Titantetraalkoxid mittels Zugabe von Wasser oder eines wäßrigen Alkohols innerhalb eines Zeitraums von etwa 20 Minuten bis 2 Stunden bei 0 bis 50°C hydrolysiert werden. Die Hydrolyse kann aber auch so bewerkstelligt werden, daß man dem ungelösten reinen Titantetraalkoxid Wasser oder eine wäßrige Alkohollösung unter den oben genannten Bedingungen zutropfen läßt. Das zur Hydrolyse erforderliche Wasser kann aber auch als Feuchtigkeit in einer Gasphase enthalten sein, indem man z.B. in die Titantetraalkoxide 3 bis 30 h lang bei 0 bis 50°C feuchten Stickstoff einleitet. Vorteilhaft kann auch die quasi "in situ-Bildung" einer für den Einsatz im Reaktor geeigneten Dispersion von TiO₂-Präzipitat in Glykol sein. In diesem Fall können die ungelösten reinen Titantetraalkoxide durch Zusatz von Glykol, das die für die Hydrolyse benötigte Wassermenge enthält, als TiO₂-Präzipitat unter den obigen Bedingungen gefällt werden. Enthält das Glykol geringere Wassermengen, kann die Hydrolyse zusätzlich durch Einleiten von beispielsweise feuchtem Stickstoff in das Reaktionsgefäß durchgeführt werden.

In analoger Weise erfolgt die Herstellung der erfindungsgemäßen TiO₂/SiO₂- und TiO₂/ZrO₂-Copräzipitate, nur daß zu deren Ausfällung jeweils von zwei Tetraalkoxiden des Titans und Siliciums bzw. des Titans und Zirkons ausgegangen wird, deren Alkoxide im übrigen gleich oder verschieden sein können. Vorteilhafte Formen der Herstellung der erfindungsgemäß verwendeten Copräzipitate bei Raumtemperatur werden im experimentellen Teil A in den Beispielen 1 und 2 beschrieben. Unter den dortigen hydrolytischen Bedingungen wird eine zu vermeidende Gelbildung ausgeschlossen, und es erfolgt eine homogene Fällung der Ti/Si- und Ti/Zr-Mischoxide.

Die Zugabemengen der erfindungsgemäßen, als Polykondensationskatalysator verwendeten Copräzipitate können in weiten Grenzen variiert werden und schließen eine Gesamtmenge von etwa 5 bis 500 ppm, bezogen auf die zu polykondensierenden Ester oder Oligoester, ein. Sie können daher prinzipiell nach oben hin von der gleichen Größenordnung sein wie im Falle der Anwendung von Sb₂O₃, das in der Regel in einer Menge von etwa 300 bis 400 ppm als Polykondensationskatalysator eingesetzt wird.

Wenn bei bestimmten Anwendungsbereichen der hergestellten Polyester und Copolyester auf die Erzielung von guten Farbwerten geachtet werden muß, wird es jedoch bevorzugt, daß man das das Titandioxid/ Siliciumdioxid-Copräzipitat und/oder das Titandioxid/ Zirkoniumdioxid-Copräzipitat in einer Gesamtmenge von nur
10 bis 100 ppm, bezogen auf die zu polykondensierenden Ester oder Oligoester, verwendet. Die erhöhte katalytische Aktivität der erfindungsgemäß verwendeten Copräzipitate gestattet die Anwendung von Zugabemengen, die erheblich geringer sind als im Falle der Anwendung von Sb₂O₃, wobei dann bei den so hergestellten Polyestern die gleiche Polykondensationszeit und ein völlig akzeptabler b*-Wert von 3,0 bis 8,0 erzielt wird. Dieser b*-Wert-Bereich entspricht insbesondere den Werten, die bei der Herstellung von Polyethylenterephthalat unter Verwendung von 400 ppm Sb₂O₃ als Polykondensationskatalysator ebenfalls erhalten werden. Die Zugabe der erfindungsgemäß verwendeten Titandioxid/Siliciumdioxid- und Titandioxid-Zirkoniumdioxid-Copräzipitate erfolgt vorzugsweise so, daß man sie den in der ersten Reaktionsstufe synthetisierten Estern oder Oligoestern, beispielsweise dem Bisglykolester der zu polykondensierenden Dicarbonsäure(n) und/oder dem Vorkondensat aus einem oder mehreren solcher Bisglykolester, vor ihrer Polykondensation in Form einer 5 bis 20%igen glykolischen Suspension zusetzt. Es ist aber auch im Prinzip möglich, die Copräzipitate schon zu irgendeinem Zeitpunkt während der ersten Reaktionsstufe zuzugeben, im Falle einer Umesterung gegebenenfalls zusammen mit einem oder mehreren Umesterungskatalysatoren. Im Falle einer Umesterung in der ersten Reaktionsstufe kann es zuweilen vorteilhaft sein, die Umesterungskatalysatoren nach der Umesterung in an sich bekannter Weise durch Zusatz von Phosphorverbindungen zu blockieren. Geeignete Phosphorverbindungen sind zum Beispiel Carbethoxy-methyl-diethylphosphonat, Di(polyoxyethylen)-hydroxymethylphosphonat, Tetraisopropyl-methylen-diphosphonat und H₃PO₄, wobei im allgemeinen eine zugegebene P-Konzentration von 30-50 ppm ausreichend ist.

Die erfindungsgemäß verwendeten Copräzipitate eignen sich unter üblichen Reaktionsbedingungen prinzipiell als Polykondensationskatalysatoren zur Herstellung der verschiedenartigsten Polyester und Copolyester, bei der bisher Sb₂O₃ als Polykondensationskatalysator, gegebenenfalls auch in Kombination mit einem oder mehreren anderen Polykondensationskatalysatoren, eingesetzt wurde. Den unterschiedlichen Arten von Polyestern und Copolyestern entsprechen auch die unterschiedlichsten Anwendungsgebiete.

Soweit mit den erfindungsgemäß verwendeten Copräzipitaten Alkydharze und gesättigte Polyesterharze (Hydroxypolyester) mit einem relativen Molekulargewicht von < 10 000 hergestellt werden, können diese als Bindemittel in Lacken und Anstrichstoffen verwendet werden. Unter Alkydharzen werden hierin nach dem heutigen Sprachgebrauch öl- bzw. fettsäuremodifizierte Polyester aus Polycarbonsäuren und Polyalkoholen sowie deren Umsetzungsprodukte mit z.B. Vinylverbindungen, Epoxidharzen, Siliconen, Diisocyanaten und Organometallverbindungen ("modifizierte" Alkydharze) verstanden. Als Polycarbonsäuren für Alkydharze werden im wesentlichen Phthalsäure, Isopthalsäure, Malonsäure, Bernsteinsäure, Adipinsäure, Azelainsäure, Sebazinsäure, Dodecandisäure, dimerisierte Fettsäuren, Hexahydrophthalsäure, Hexahydroterephthalsäure, Maleinsäure, Fumarsäure und zwecks Flammhemmung halogenhaltige Dicarbonsäuren, wie Tetrachlorphthalsäureanhydrid, eingesetzt. Als Polyole verwendet man im allgemeinen Glycerin, Pentaerythrit, Dipentaerythrit, Trimethylolpropan, Trimethyloläthan, Sorbitol und difunktionelle Polyole, wie Äthylenglykol, 1,2-Propylenglykol, 1,3- und 1,4-Butandiol, Diäthylenglykol, Dipropylenglykol und Neopentylglykol. Dritte Komponente für die Herstellung von Alkydharzen sind langkettige Fettsäuren, seien es synthetische Fettsäuren, wie Pelargonsäure, Abietinsäure und synthetische Fettsäuregemische (C₇-C₉), oder natürliche Fettsäuren, die fast ausschließlich in Form ihrer Fette und Öle verwendet werden, z.B. Leinöl, Ricinusöl, Kokosöl, Sojaöl und Baumwollsaatöl. Zur Herstellung der gesättigten Polyesterharze, die in DIN 55 945 definiert werden, werden hingegen bei der Polykondensation keine längerkettigen Fettsäuren eingesetzt, während ansonsten die verwendeten gesättigten Polycarbonsäuren und Polyalkohole im wesentlichen die gleichen sind, wie man sie bei der Herstellung von Alkydharzen einsetzt.

Wenn mit den in Rede stehenden Copräzipitaten (Co)polyester als Vorprodukte für Polyurethane mit einem relativen Molekulargewicht von < 10 000 synthetisiert werden, führt dies je nach deren Weiterverarbeitung auf der Grundlage bekannter Verfahrensweisen nicht nur zu Polyurethan-Lacken, sondern auch zu einer Vielfalt unterschiedlicher Kunststofftypen mit variablen wertvollen Gebrauchseigenschaften (Duromere, Thermoplaste, Gießelastomere, harte und weiche Schaumstoffe, Preßmassen, harte und flexible Beschichtungen, Klebstoffe). Die niedrigmolekularen Polyester und Copolyester als Vorprodukte für Polyurethane werden im allgemeinen aus gesättigten aliphatischen oder aromatischen Dicarbonsäuren und difunktionellen oder di- und trifuntionellen Alkoholen hergestellt und sind linear oder leicht bis stark verzweigt. Mit den erfindungsgemäß verwendeten Copräzipitaten ist die Herstellung der dafür bekannten gesamten breiten Palette von Hydroxylpolyestern mit Hydroxylzahlen von 28-300 mg KOH/g und Säurezahlen meist unter 1 mg KOH/g möglich. Die stark verzweigten Polyester unter ihnen, die überwiegend auf der Basis von aromatischen oder hydroaromatischen Dicarbonsäuren gewonnen werden, dienen vorwiegend als Bindemittel für Polyurethanlacke.

Die erfindungsgemäß verwendeten Copräzipitate eignen sich unter üblichen Reaktionsbedingungen insbesondere als Polykondensationskatalysatoren zur Herstellung der bekannten hochschmelzenden faser- und filmbildenden Polyester, wie Polyethylenterephthalat, Polybutylenterephthalat, Poly(ethylen-2,6-naphthalin-dicarboxylat), Poly(butylen-2,6-naphthalin-dicarboxylat), Poly(1,4-dimethylencyclohexanterephthalat) und deren Mischpolyester auf der Basis hoher Homopolyester-Anteile von mindestens
80 Molprozent, die der Gattung der thermoplastischen Polyester angehören. Derartige Polyester und Copolyester besitzen grundsätzlich ein Molekulargewicht von > 10 000. Die mit den Copräzipitaten bevorzugt polykondensierten Polyalkylenterephthalate, insbesondere Polyethylenterephthalat und Polybutylenterephthalat, können als Mischpolyester bis-zu 20 Molprozent aus Einheiten bestehen, die sich von mindestens einer weiteren polyesterbildenden Komponente ableiten. Im übrigen spielt es für die Anwendung der erfindungsgemäßen Polykondensationskatalysatoren naturgemäß keine Rolle, ob die Bisglykolester der zu polykondensierenden Dicarbonsäure(n) und/oder die Vorkondensate aus einem oder mehreren solchen Bisglykolester nach einem Umesterungsverfahren oder nach einem Direktveresterungsverfahren hergestellt worden sind.

So eignen sich die erfindungsgemäßen Polykondensationskatalysatoren sowohl für die Herstellung eines faserbildenden Polyethylenterephthalats mit einer intrinsic-Viskosität [η] von 0,65-0,75, das in der Regel zu Stapelfasern für textile Zwecke weiterverarbeitet wird, als auch für die Herstellung von faserbildenden Polyethylenterephthalaten mit einer intrinsic-Viskosität [η] von 0,75-0,80 und 0,95-1,05, aus denen Filamentgarne für industrielle Zwecke hergestellt werden. Die erhöhten Molekulargewichte lassen sich durch kontinuierliche Polykondensation mit direkter Verspinnung oder vorzugsweise durch Nachkondensation in fester Phase erzielen. Für die Nachkondensation in fester Phase ist es vorteilhaft, etwaige vorhandene Umesterungskatalysatoren in an sich bekannter Weise durch Phosphorverbindungen zu blockieren. Hierfür geeignete Phosphorverbindungen sind zum Beispiel Di(polyoxyethylen)-hydroxymethylphosphonat, Tetraisopropyl-methylen-diphosphonat und H₃PO₄, wobei eine zugegebene P-Konzentration von 30-50 ppm ausreichend ist.

Die mit den erfindungsgemäßen Polykondensationskatalysatoren hergestellten faser- und filmbildenden thermoplastischen Polyester, insbesondere Polyethylenterephthalat und Polybutylenterephthalat, können beispielsweise natürlich auch mittels Spritzgießens und Extrudierens zu Formkörpern und Profilen aller Art verarbeitet werden. Wenn man zum Beispiel ein mit den erfindungsgemäßen Polykondensationskatalysatoren hergestelltes Polyethylenterephthalat zu PET-Flaschen verarbeitet, weisen diese eine höhere Transparenz und einen niedrigeren Acetaldehyd-Gehalt auf.

Die weiteren polyesterbildenden Komponenten für faser- und filmbildende Copolyester können ein aliphatisches Diol, wie Ethylenglykol, Propylenglykol, Tetramethylenglykol, Pentamethylenglykol, Hexamethylenglykol, Polyethylenglykol, Polypropylenglykol und Poly(tetrahydrofuran)diol, ein aromatisches Diol, wie Brenzcatechin, Resorcin und Hydrochinon, ein alicyclisches Diol, wie 1,4-Cyclohexandimethanol und Cyclohexandiol, eine aliphatische Dicarbonsäure, wie Adipinsäure, Sebazinsäure und Decandicarbonsäure, eine aromatische Dicarbonsäure, wie Isophthalsäure, 5-Natrium-sulfoisophthalsäure, Natriumsulfoterephthalsäure und 2,6-Naphthalindicarbonsäure, und eine alicyclische Dicarbonsäure, wie Hexahydroterephthalsäure und 1,3-Cyclohexandicarbonsäure, sein. Die analogen polyesterbildenden Komponenten zur Mischpolyesterbildung kommen auch für die zum Teil oben schon erwähnten fadenbildenden Homopolyester in Betracht, die nicht der Gattung der Polyalkylenterephthalate angehören.

Selbstverständlich können die film- und faserbildenden Polyester als übliche Modifizierungsmittel auch bekannte Verzweigungsmittel, wie Pentaerythrit, Trimellitsäure, Pyromellithsäure und Trimesinsäure oder deren Ester, in den dafür üblichen geringen Mengen von z.B. 1 bis 15 Mikro-äquivalenten pro g Polymer enthalten, die ein Schnellspinnen von 3000 bis 4000 m/min und mehr, aber auch ein Streck-texturieren mit einer Geschwindigkeit von wenigstens 1000 m/min gewährleisten. Diese Verzweigungsmittel werden in vorteilhafter Weise als eine Lösung in Ethylenglykol dem Bisglykolester der zu polykondensierenden Dicarbonsäure(n) zugegeben.

Der Terminus Copolyester schließt ebenfalls die umfangreiche Klasse der Polyetherester ein. Die thermoplastischen Polyetherester stellen bekanntlich Blockcopolymere dar, die aus wechselseitig incompatiblen steifen kristallinen und weichen amorphen Segmenten synthetisiert werden. Die steifen und kurzkettigen Segmente bestehen im allgemeinen überwiegend aus einem aromatischen Polyester, z.B. Ethylenterephthalat-oder Butylenterephthalat-Einheiten, während die weichen und langkettigen Segmente insbesondere aus dem Reaktionsprodukt eines aliphatischen Polyethers, z.B. Poly(butylenglykol) oder Poly(ethylenglykol), mit einer aliphatischen, cycloaliphatischen oder aromatischen Dicarbonsäure bestehen. Sowohl die langkettigen als auch die kurzkettigen Esterein-heiten stellen oft Copolyester dar, die aus der begrenzten Mitverwendung einer oder mehrerer weiterer Dicarbonsäure- und Glykolkomponenten resultieren. Thermoplastische Polyetherester, zu deren Herstellung sich die erfindungsgemäß als Polykondensationskatalysatoren eingesetzten Titandioxid/Siliciumdioxid- und Titandioxid/ Zirkoniumdioxid-Copräzipitate ebenfalls eignen, werden beispielsweise in der US-PS 3,023,192, GB-PS 682 866, DE-PS 23 52 584, EP-A-0 051 220 und EP-A-0 109 123 beschrieben.

Die erfindungsgemäß verwendeten Titandioxid/Siliciumdioxid-und Titandioxid/Zirkoniumdioxid-Copräzipitate sind auch für die Herstellung von vollaromatischen bzw. flüssig-kristallinen Polyestern geeignet, wenn diese auf der Basis üblicher Polykondensationskatalysatoren, wie Sb₂O₃ und Titanalkoxide, erfolgt. So sind beispielsweise nach der US-PS 4,421,908 vollaromatische Polyester aus 10-90 Molprozent einer Hydroxy-naphthalin-carbonsäure, 5-45 Molprozent mindestens einer weiteren aromatischen Dicarbonsäure, z.B. Terephthalsäure, und 5-45 Molprozent mindestens eines aromatischen Diols, z.B. Hydrochinon, bekannt. Nach der EP-A-0 472 366 werden vollaromatische Polyester aus (A) Isophthalsäure, (B) Hydrochinon, (C) aus 4,4-Dihydroxydiphenyl und/oder p-Hydroxybenzoesäure und/oder 2-Hydroxy-6-naphthalin-carbonsäure und (D) einem Phenol hergestellt. Und in der EP-A-0 496 404 werden vollaromatische Polyester beschrieben, die durch Umsetzung von mindestens einem Dialkylester einer aromatischen Dicarbonsäure, z.B. DMT, mit mindestens einem aromatischen Polycarbonat, z.B. Poly(4,4'-isopropyliden-diphenylen-carbonat) und/oder einem aromatischen Dialkyldicarbonat erhalten werden. In diesen beispielhaft genannten Verfahren zur Herstellung vollaromatischer Polyester lassen sich die darin verwendeten Polykondensationskatalysatoren, wie Sb₂O₃, Titanalkoxide und Zirkonalkoxide, in vorteilhafter Weise durch die erfindungsgemäßen spezifischen Copräzipitate ersetzen, ganz gleich, ob man sie schon in der ersten Reaktionsstufe oder der darauf folgenden eigentlichen Polykondensationsstufe zusetzt.

Die Erfindung wird anhand der nachfolgenden Beispiele näher erläutert. Die darin angegebene relative Lösungsviskosität wurde bei 25°C als 1 gew.%ige Lösung in m-Kresol gemessen. Die Anzahl der Carboxylgruppen wurde als Carboxylgruppen-äquivalente/10⁶ g oder mmol/kg des Polymeren angegeben. Diese Größe wurde durch Titration des Polymeren in o-Kresol mit Kaliumhydroxyd bestimmt.

Der Beurteilung der Farbe der Polyester wurde das L* a* b*-Farbsystem zugrundegelegt. Dieses ist eines der Farbsysteme zur Vereinheitlichung der Farbmessung und wurde aufgrund höherer Genauigkeit in der Darstellung wahrnehmbarer Farben und Farbdifferenzen durch die CIE-Kommission (Commission Internationale de l'Eclairage) im Jahr 1976 empfohlen. In diesem System ist L* der Helligkeitsfaktor und a* bzw. b* sind Farbmeßzahlen. Im vorliegenden Fall ist der b*-Wert wichtig, der die gelb/blau-Balance angibt. Ein positiver b*-Wert bedeutet eine Gelb-Verfärbung, ein negativer b*-Wert eine Blau-Verfärbung. Herkömmlich mit Antimontrioxid hergestellte Polyester weisen einen b*-Wert zwischen 3 und 8 auf. Für Produkte, die nicht farbkritisch sind, werden auch höhere Werte akzeptiert.

### Herstellung der TiO₂/SiO₂- und TiO₂/ZrO₂-Copräzipitate

### Beispiel 1

Katalytisch wirksames Titandioxid/Siliciumdioxid-Copräzipitat (TiO₂:SiO₂ = 95:5 mol/mol)

11,37 g Titan (IV)-tetraisopropylat (40 mmol) und 0,44 g Tetraethoxysilan (2,1 mmol) werden mit 100 ml absolutem Ethanol gelöst (Lösung A). 10,27 g destilliertes H₂O (0,57 mol) werden mit 100 ml absolutem Ethanol gemischt (Lösung B). Lösung A wird vorgelegt, und innerhalb von 30 min wird bei 22°C Lösung B zugetropft. Es fällt ein weißer Niederschlag aus. Nach 1 h Rühren wird das Gemisch zentrifugiert, der Rückstand 3 mal mit destilliertem H₂O gewaschen. Das erhaltene TiO₂/SiO₂-Copräzipitat wird bei 70°C unter Vakuum getrocknet.

### Beispiel 2

Katalytisch wirksames Titandioxid/Zirkoniumdioxid-Copräzipitat (TiO₂:ZrO₂ = 97:3 mol/mol)

25,58 g Titan(IV)-tetraisopropylat (90,0 mmol) und 0,92 g Zirkonium(IV)-tetrapropylat (2,8 mmol) werden in 263 g absolutem Ethanol gelöst (Lösung A). 27,02 g destilliertes H₂O (1,5 mol) werden mit 263 g absolutem Ethanol gemischt (Lösung B). Lösung A wird vorgelegt, und innerhalb von 30 min wird bei 22°C Lösung B zugetropft. Es fällt ein weißer Niederschlag aus. Nach 1 h Rühren wird das Gemisch zentrifugiert. Der Rückstand wird einmal mit destilliertem H₂O gewaschen, dann mit Ethanol gewaschen und jeweils 20 min zentrifugiert. Das erhaltene TiO₂/ZrO₂-Copräzipitat wird bei 60-70°C über 24 h unter Vakuum getrocknet.

### Polykondensationsbeispiele

### Beispiel 3

Es wurde in einem Zweistufenverfahren Polyethylenterephthalat hergestellt. In der ersten Stufe, der Umesterung, erfolgte die Umsetzung von Ethylenglykol und Dimethylterephthalat (= DMT) im Molverhältnis 2,5:1 in Gegenwart von 100 ppm ZnAc₂.2 H₂O (Ac = Acetat) und 150 ppm Mn Ac₂.4 H₂O, bezogen auf DMT, bei Temperaturen im Bereich von 165 bis 265°C, wobei zur Vermeidung einer Sublimation des DMT die kontinuierliche Temperaturerhöhung von 165°C auf 265°C nicht zu rasch vorgenommen wurde. Das bei der Umesterung freigesetzte Methanol wird über eine Kolonne abdestilliert. Bei Erreichen der Reaktionstemperatur von 240°C wurden 50 ppm Phosphor, bezogen auf das eingesetzte DMT, als Phosphonoessigsäureethylester zur Blockierung der Umesterungskatalysatoren zugesetzt.

Sobald die Reaktionstemperatur von 250°C erreicht war, wurden 100 ppm, bezogen auf das vorliegende Bis-(2-hydroxyethyl)-terephthalat, des gemäß Beispiel 1 hergestellten Titandioxid/ Siliciumdioxid-Copräzipitates mit der Zusammensetzung TiO₂:SiO₂ = 95:5 mol/mol in Form einer 5 gew.%igen Suspension in Glykol zugesetzt. Die Polykondensationsreaktion erfolgte bei 290°C unter einem Vakuum von 1,3 mbar. Nach einer Reaktionsdauer von 97 Minuten wurde ein Polymer mit einer relativen Lösungsviskosität von 1,646 erhalten. Der b*-Wert betrug 9,2, der COOH-Endgruppengehalt 17,5 Äquivalente/10⁶ g Polymer.

### Beispiel 4

Beispiel 3 wurde mit der Abänderung wiederholt, daß bei 250°C 100 ppm, bezogen auf das vorliegende Bis-(2-hydroxyethyl)-terephthalat, des gemäß Beispiel 2 hergestellten Titandioxid/Zirkoniumdioxid-Copräzipitats mit der Zusammensetzung TiO₂ : ZrO₂ = 97:3 mol/mol in Form einer 5 gew.%igen Suspension in Glykol zugesetzt wurden. Die Polykondensationsreaktion erfolgte bei 290°C unter einem Vakuum von 1,3 mbar. Nach einer Reaktionsdauer von 80 Minuten wurde ein Polymer mit einer relativen Lösungsviskosität von 1,634 erhalten. Der b*-Wert betrug 7,3, der COOH-Endgruppengehalt 16,9 Äquivalente/10⁶ g Polymer.

### Beispiel 5

Es wurde in einem Zweistufenverfahren Polyethylenterephthalat hergestellt, wobei in der ersten Stufe eine Direktveresterung der Terephthalsäure mit Ethylenglykol zu Bis-(2-hydroxyethyl)-terephthalat durchgeführt wurde. In der zweiten Reaktionsstufe erfolgte die Polykondensation unter Verwendung von a) 400 ppm Sb₂O₃, b) 100 ppm TiO₂/SiO₂ (95:5 mol/mol) und c) TiO₂/ZrO₂ (97:3 mol/mol) als Polykondensationskatalysatoren.
a) Sb₂O₃ als Polykondensationskatalysator (Vergleich) 1707 g (10,3 mol) Terephthalsäure werden zusammen mit 1020 g Glykol (16,4 mol) und 1 ppm Entschäumer M 10 (von der Firma Dow Corning) im Veresterungsautoklaven aufgeheizt, bis sich durch die Wasserabspaltung ein Überdruck von 7 bar eingestellt hat (235°C Chargen-temperatur). Das Erreichen dieses Drucks wird als Startzeit der Umsetzung gewertet. Der Überdruck wird 60 min lang gehalten, wobei die Innentemperatur bis auf ca. 250°C gesteigert wird. Der dabei ausgetragene Wasserdampf wird im Kühler kondensiert und im Meß-zylinder aufgefangen. Nach insgesamt 60 min wird der Innendruck schrittweise innerhalb von weiteren 60 min auf Normaldruck abgesenkt (Temperatur zwischen 250 und 260°C). Anschließend wird das Produkt in den Polykondensationsautoklaven abgelassen. Unmittelbar nach dem Ablassen werden 50 ppm Phosphor als Phosphonessigsäure-ethylester (PEE) bei 240°C zugegeben. Bei einer Innentemperatur von 250°C (nach etwa 5 min) erfolgt dann die Zugabe von 400 ppm Sb₂O₃, bezogen auf das vorliegende Bis-(2-hydroxyethyl)-terephthalat, in Form einer 1,1%igen Lösung in Glycol. Unter weiterem Heizen wird ein Vakuumprogramm gestartet, das den Innendruck innerhalb von 25 min auf ca. 1 Torr absenkt. Die Innentemperatur wird nach der Peakfahrweise (Peak-temperatur: 298°C) geregelt. Der Reaktionsendpunkt erfolgt durch Messung der Rührwerksleistungsaufnahme. Nach 95 min wird ein Produkt mit der Lösungsviskosität von 1,681 erhalten. Der Carboxylendgruppen-Gehalt betrug 20,1 mmol/kg.
b) TiO₂/SiO₂ (95:5 mol/mol) als Polykondensationskatalysator
   Beispiel 5 a) wurde mit der Abänderung wiederholt, daß bei 250°C 100 ppm TiO₂/SiO₂ (95:5 mol/mol) als Polykondensationskatalysator, bezogen auf das vorliegende Bis-(2-hydroxyethyl)-terephthalat, in Form einer 5%igen Dispersion in Glycol zugegeben wurden. Nach 94 min wird ein Produkt mit der Lösungsviskosität von 1,669 erhalten. Der Carboxylendgruppen-Gehalt betrug 12,2 mmol/kg, ist also deutlich besser als bei Versuch 5 a).
c) TiO₂/ZrO₂ (97:3 mol/mol)als Polykondensationskatalysator Beispiel 5 a) wurde mit der Abänderung wiederholt, daß bei 250°C 50 ppm TiO₂/ZrO₂ (97:3 mol/mol) als Polykondensationskatalysator, bezogen auf das vorliegende Bis-(2-hydroxyethyl)-terephthalat, in Form einer 5%igen Dispersion in Glycol zugegeben wurden. Nach 84 min wird ein Produkt mit der Lösungsviskosität von 1,682 erhalten. Der Carboxylendgruppen-Gehalt betrug 13,4 mmol/kg, liegt also ebenfalls günstiger als bei Versuch 5 a).

## Patentansprüche

1. Verfahren zur Herstellung von Polyestern und Copolyestern durch Polykondensation von polyesterbildenden Ausgangskomponenten, wobei in einer ersten Reaktions-stufe Ester oder Oligoester hergestellt werden, die in einer zweiten Reaktionsstufe in Gegenwart von Titankatalysatoren polykondensiert werden, **dadurch gekennzeichnet, daß** man in der Polykondensationsstufe zur Polykondensation der Ester oder Oligoester als Polykondensationskatalysator ein Titandioxid/Siliciumdioxid-Copräzipitat mit einer Zusammensetzung aus TiO₂ : SiO₂ von
> 90 : 10 mol/mol und/oder ein Titandioxid/Zirkonium-dioxid-Copräzipitat mit einer Zusammensetzung aus TiO₂ : ZrO₂ von > 95 : 5 mol/mol einsetzt, erhältlich durch hydrolytische Ausfällung der entsprechenden, aus ein- oder mehrwertigen Alkoholen gebildeten Metallalkoholate.

2. Verfahren nach Anspruch 1, **dadurch gekennzeichnet, daß** man Titandioxid-Siliciumdioxid-Copräzipitate und/oder Titandioxid/Zirkoniumdioxid-Copräzipitate einsetzt, erhältlich durch hydrolytische Ausfällung der entsprechenden, aus einwertigen Alkoholen mit 1-6 C-Atomen gebildeten Metallalkoholate.

3. Verfahren nach einem oder mehreren der Ansprüche 1 bis 2, **dadurch gekennzeichnet, daß** man das Titandioxid/Siliciumdioxid-Copräzipitat und/oder Titandioxid/Zirkoniumdioxid-Copräzipitat in einer Gesamtmenge von 5-500 ppm, bezogen auf die zu polykondensierenden Ester oder Oligoester, einsetzt.

4. Verfahren nach Anspruch 3, **dadurch gekennzeichnet, daß** man das Titandioxid/Siliciumdioxid-Copräzipitat und/oder Titandioxid/Zirkoniumdioxid-Copräzipitat in einer Gesamtmenge von 10 bis 100 ppm, bezogen auf die zu polykondensierenden Ester oder Oligoester, einsetzt.

5. Verfahren nach einem oder mehreren der Ansprüche 1 bis 4, **dadurch gekennzeichnet, daß** man das Titandioxid-Siliciumdioxid-Copräzipitat und/oder das Titandioxid/Zirkoniumdioxid-Copräzipitat den zu polykondensierenden Estern oder Oligoestern vor ihrer Polykondensation in Form einer 5 bis 20 gew.%igen glykolischen Suspension zusetzt.

6. Verfahren nach einem oder mehreren der Ansprüche 1 bis 5, **dadurch gekennzeichnet, daß** man etwaig vorhandene Umesterungskatalysatoren aus der ersten Reaktionsstufe durch zusätzliche Zugabe von einer oder mehreren Phosphorverbindungen blockiert.

7. Verfahren nach Anspruch 6, **dadurch gekennzeichnet, daß** als Blockierungsmittel Carbethoxy-methyl-diethylphosphonat, Di(polyoxyethylen)hydroxy-methylphosphonat, Tetraisopropyl-methylen-diphosphonat und/oder H₃PO₄ eingesetzt werden.

8. Verwendung der Polykondensationskatalysatoren gemäß den Ansprüchen 1 bis 5 zur Herstellung von Alkydharzen mit einem relativen Molekulargewicht von < 10 000.

9. Verwendung der Polykondensationskatalysatoren gemäß den Ansprüchen 1 bis 5 zur Herstellung von gesättigten Polyesterharzen mit einem relativen Molekulargewicht von < 10 000.

10. Verwendung der Polykondensationskatalysatoren gemäß den Ansprüchen 1 bis 5 zur Herstellung von Polyestern und Copolyestern als Vorprodukte für Polyurethane mit einem relativen Molekulargewicht von < 10 000.

11. Verwendung der Polykondensationskatalysatoren gemäß den Ansprüchen 1 bis 5 zur Herstellung von thermoplastischen Polyestern und Copolyestern mit einem relativen Molekulargewicht von > 10 000.

12. Verwendung der Polykondensationskatalysatoren gemäß Anspruch 11 zur Herstellung von Polyethylenterephthalat, Polybutylenterephthalat, Poly(ethylen-2,6-naphthalin-dicarboxylat), Poly(butylen-2,6-naphthalin-dicarboxylat), Poly(1,4-dimethylencyclohexanterephthalat) und deren Mischpolyestern auf der Basis hoher Homopolyester-Anteile von mindestens 80 Molprozent.

13. Verwendung der Polykondensationskatalysatoren gemäß Anspruch 11 zur Herstellung von Polyetherestern.

14. Verwendung der Polykondensationskatalysatoren gemäß den Ansprüchen 1 bis 5 zur Herstellung von vollaromatischen bzw. flüssig-kristallinen Polyestern.

## Claims

1. Process for producing polyesters and copolyesters by polycondensation of polyester-forming starting components, esters or oligoesters being produced in a first reaction stage which are polycondensed in a second reaction stage in the presence of titanium catalysts, **characterised in that** a titanium dioxide/silicon dioxide coprecipitate with a composition of TiO₂:SiO₂ of > 90:10 mol/mol and/or a titanium dioxide/zirconium dioxide coprecipitate with a composition of TiO₂:ZrO₂ of > 95:5 mol/mol, obtainable by hydrolytic precipitation of the corresponding metal alkoxides formed from mono- or polyhydric alcohols, is/are used in the polycondensation stage as a polycondensation catalyst for polycondensation of the esters or oligoesters.

2. Process according to claim 1, **characterised in that** titanium dioxide-silicon dioxide coprecipitates and/or titanium dioxide/zirconium dioxide coprecipitates, obtainable by hydrolytic precipitation of the corresponding metal alkoxides formed from monohydric alcohols with 1 to 6 carbon atoms, is/are used.

3. Process according to one or more of claims 1 to 2,
**characterised in that** titanium dioxide/silicon dioxide coprecipitate and/or titanium dioxide/zirconium dioxide coprecipitate in a total quantity of 5 to 500 ppm, based on the esters or oligoesters to be polycondensed, is/are used.

4. Process according to claim 3, **characterised in that** titanium dioxide/silicon dioxide coprecipitate and/or titanium dioxide/zirconium dioxide coprecipitate in a total quantity of 10 to 100 ppm, based on the esters or oligoesters to be polycondensed, is/are used.

5. Process according to one or more of claims 1 to 4,
**characterised in that** titanium dioxide-silicon dioxide coprecipitate and/or the titanium dioxide/zirconium dioxide coprecipitate is added in the form of a 5 to 20 wt.% glycol suspension to the esters or oligoesters to be polycondensed prior to their polycondensation.

6. Process according to one or more of claims 1 to 5,
**characterised in that** any transesterification catalysts present from the first reaction stage are blocked by further addition of one or more phosphorous compounds.

7. Process according to claim 6, **characterised in that** carbethoxy-methyl-diethylphosphonate, di(polyoxyethylene)hydroxy-methylphosphonate, tetraisopropylmethylene-diphosphonate and/or H₃PO₄ is/are used as blocking agent.

8. Use of polycondensation catalysts according to claims 1 to 5 for producing alkyd resins with a relative molecular weight of < 10,000.

9. Use of the polycondensation catalysts according to claims 1 to 5 for producing saturated polyester resins with a relative molecular weight of < 10,000.

10. Use of the polycondensation catalysts according to claims 1 to 5 for producing polyesters and copolyesters as intermediate products for polyurethanes with a relative molecular weight of < 10,000.

11. Use of the polycondensation catalysts according to claims 1 to 5 for producing thermoplastic polyesters and copolyesters with a relative molecular weight of > 10,000.

12. Use of the polycondensation catalysts according to claim 11 for producing polyethylene terephthalate, polybutylene terephthalate, poly(ethylene-2,6-naphthalene dicarboxylate), poly(butylene-2,6-naphthalene dicarboxylate), poly(1,4-dimethylenecyclohexane terephthalate) and their mixed polyesters based on higher homopolyester proportions of at least 80 mol %.

13. Use of the polycondensation catalysts according to claim 11 for producing polyether esters.

14. Use of the polycondensation catalysts according to claims 1 to 5 for producing fully aromatic and liquid/crystalline polyesters.

## Revendications

1. Procédé de fabrication de polyesters et de copolyesters par polycondensation de composants de départ capables de former des polyesters, la première étape réactionnelle consistant en la synthèse d'esters ou d'oligoesters qui, dans une deuxième étape réactionnelle, sont polycondensés en présence de catalyseurs à base de titane, lequel procédé est **caractérisé par le fait que** que l'on utilise en tant que catalyseur pour l'étape de polycondensation des esters ou oligoesters un coprécipité de dioxyde de titane et de dioxyde de silicium avec un rapport molaire TiO₂/SiO₂ supérieur à 90/10 et/ou un coprécipité de dioxyde de titane et de dioxyde de zirconium avec un rapport molaire TiO₂/ZrO₂ supérieur à 95/5, que l'on peut obtenir par précipitation, déclenchée par hydrolyse, des alcoolates métalliques appropriés formés à partir d'alcools mono- ou polyfonctionnels.

2. Procédé selon la revendication 1, **caractérisé par le fait que** l'on utilise des coprécipités de dioxyde de titane et de dioxyde de silicium et/ou des coprécipités de dioxyde de titane et de dioxyde de zirconium, que l'on peut obtenir par précipitation, déclenchée par hydrolyse, des alcoolates métalliques appropriés formés à partir de monoalcools en C₁₋₆.

3. Procédé selon une ou plusieurs des revendications 1 et 2, **caractérisé par le fait que** l'on utilise le coprécipité de dioxyde de titane et de dioxyde de silicium et/ou le coprécipité de dioxyde de titane et de dioxyde zirconium en une quantité totale comprise entre 5 et 500 ppm, rapportée à la quantité d'ester ou d'oligoester à polycondenser.

4. Procédé selon la revendication 3, **caractérisé par le fait que** l'on utilise le coprécipité de dioxyde de titane et de dioxyde de silicium et/ou le coprécipité de dioxyde de titane et de dioxyde de zirconium en une quantité totale comprise entre 10 et 100 ppm, rapportée à la quantité d'ester ou d'oligoester à polycondenser.

5. Procédé selon une ou plusieurs des revendications 1 à 4, **caractérisé par le fait que** l'on ajoute le coprécipité de dioxyde de titane et de dioxyde de silicium et/ou le coprécipité de dioxyde de titane et de dioxyde de zirconium aux esters ou oligoesters à polycondenser, avant leur polycondensation, sous forme d'une suspension glycolique à 5 - 20 % en poids.

6. Procédé selon l'une ou plusieurs des revendications 1 à 5, **caractérisé par le fait que** l'on bloque d'éventuels catalyseurs de transestérification de la première étape réactionnelle par addition d'un ou de plusieurs composés de phosphore.

7. Procédé selon la revendication 6, **caractérisé par le fait que** l'on utilise comme agent bloquant du phosphonate de carbéthoxyméthyl-diéthyle, du phosphonate de di(polyoxyéthylène)hydroxyméthyle, du méthylène-diphosphonate de tétraisopropyle et/ou du H₃PO₄.

8. Utilisation des catalyseurs de polycondensation selon l'une quelconque des revendications 1 à 5 pour la synthèse de résines alkyde ayant une masse molaire moyenne inférieure à 10 000.

9. Utilisation des catalyseurs de polycondensation selon les revendications 1 à 5, pour la synthèse de résines polyester saturées ayant une masse molaire moyenne inférieure à 10 000.

10. Utilisation des catalyseurs de polycondensation selon les revendications 1 à 5 pour la synthèse de polyesters et de copolyesters, en tant que précurseurs de polyuréthannes, ayant une masse molaire moyenne inférieure à 10 000.

11. Utilisation des catalyseurs de polycondensation selon les revendications 1 à 5, pour la synthèse de polyesters et de copolyesters thermoplastiques ayant une masse molaire moyenne supérieure à 10 000.

12. Utilisation des catalyseurs de polycondensation selon la revendication 11, pour la synthèse de poly(éthylène téréphtalate), de poly(butylène téréphtalate), de poly(éthylène-2,6-naphtalènedicarboxylate), de poly(butylène-2,6-naphtalènedicarboxylate), de poly(1,4-diméthylènecyclohexane téréphta-late) et des copolyesters de ceux-ci contenant d'importantes fractions de séquences homopolyester au moins égales à 80 % en moles.

13. Utilisation des catalyseurs de polycondensation selon la revendication 11, pour la synthèse de poly(éther ester).

14. Utilisation des catalyseurs de polycondensation selon l'une quelconque des revendications 1 à 5 pour la synthèse de polyesters complètement aromatiques ou de type cristaux liquides.
